# EUROPEAN PATENT APPLICATION

(11) **EP 4 265 947 A1**
(43) Date of publication of application: **25.10.2023**
(21) Application number: 21905279.2
(22) Date of filing: 20.10.2021
(51) Int. Cl.: F16K 27/08, F16K 27/02, F16K 1/00, F25B 41/20

(54) **STOP VALVE AND AIR CONDITIONING SYSTEM HAVING SAME**

(30) Priority: 16.12.2020 CN 202023037035 U
(71) Applicant: Zhejiang Dunan Artificial Environment Co., Ltd., Shaoxing Zhejiang 311835 (CN)
(72) Inventor: CHEN, Diyong, Shaoxing, Zhejiang 311835 (CN); ZHOU, Feng, Shaoxing, Zhejiang 311835 (CN); FENG, Xiongxiong, Shaoxing, Zhejiang 311835 (CN); LOU, Feng, Shaoxing, Zhejiang 311835 (CN)
(74) Representative: Petraz, Gilberto Luigi
(86) International application number: PCT/CN2021/124978
(87) International publication number: WO 2022/127350

(57) **Abstract**

A stop valve and an air conditioning system having the same are provided. The stop valve includes a valve body (10), a valve core (20) and a valve cap (30). The valve cap (30) is disposed at the open end of the valve body (10) and threadedly connected to the valve body (10). The stop valve further includes a screw threaded member (40), the valve cap (10) is provided with an operating hole (31), and the screwed threaded member (40) is capable of inserting into the operating hole (31) and threadedly matched with the operating hole (31). The air conditioning system includes the stop valve.

## Description

### CROSS-REFERENCE TO RELATED APPLICATIONS

This application claims priority to Chinese patent application No. 202023037035.2, filed on December 16, 2020, and titled "STOP VALVE AND AIR CONDITIONING SYSTEM HAVING SAME" in the China National Intellectual Property Administration, the content of which is hereby incorporated by reference in its entirety.

### TECHNICAL FIELD

The present invention generally relates to the field of the air conditioning system, and in particular, to a stop valve and an air conditioning system having the same.

### BACKGROUND

A stop valve is an important component of an air conditioning system, and is disposed in a refrigerant circuit of an air conditioning system. The stop valve is configured for opening or closing the refrigerant circuit, and for vacuumizing a valve cavity or filling a refrigerating fluid into the valve cavity.

The stop valve in the related art includes a valve body, a valve core, a valve cap, etc. The valve core is provided inside the valve body, and the valve cap is disposed on the valve body to serve as a maintenance window of the stop valve. During maintenance of the air conditioning system, the valve cap is disassembled from the valve body, so that components inside the valve body, such as the valve core can be operated. Therefore, in extreme cases, when a stop ring or a constriction (i.e., a limiting structure of the valve core) in the valve body fails, the valve core flies out of the valve body, resulting in personal safety hazards.

### SUMMARY

In view of above, the present invention provides a stop valve, which is convenient for operations such as maintenance and testing, and prevents personal safety hazards from occurring.

To solve the above problem, the present invention provides a following technical solution.

The stop valve includes a valve body, a valve core and a valve cap. The valve body includes a valve cavity provided with an open end, the valve core is provided inside the valve cavity and capable of moving in the valve cavity. The valve cap is disposed at the open end of the valve body and threadedly connected to the valve body. The stop valve further includes a screw threaded member, the valve cap is provided with an operating hole, and the screwed threaded member is capable of inserting into the operating hole and threadedly matched with the operating hole.

It can be understood that in the present invention, the operating hole is provided on the valve cap, so that the screwed threaded member is capable of inserting into the operating hole and threadedly matched with the operating hole. Therefore, when the inside of the valve body is subjected to operations such as maintenance and testing, as long as the screw threaded member is disassembled from the operating hole, the valve rod can be inserted into the operating hole to screw out the valve core for testing. In this way, when the components inside the valve body is subjected to operations such as maintenance and testing, it is not necessary to disassemble the entire valve cap, so as to avoid a risk of the valve core flying out of the valve body due to a failure of a limiting structure of the valve core.

In some embodiments, a side of the valve cap towards the valve body is provided with a protrusion. The protrusion extends towards the inside of the valve cavity, the opening hole is located on the protrusion, and the protrusion is limitedly matched with the valve core.

It can be understood that when a manipulator is inserted into the operating hole and the valve core is screwed out for testing, an end face of the valve core can abut against the protrusion, so that the valve core cannot be separated from the valve body. The protrusion can play a role of limiting a position of the valve core.

In some embodiments, the valve cavity is provided with a limiting ring, and the limiting ring is provided at an end of the valve cavity away from the valve core. An end of the protrusion away from the valve cap extends to the limiting ring and is located in the same plane with the limiting ring. In some embodiments, an end of the protrusion away from the valve cap extends through the limiting ring and extends along an axis of the valve cavity.

It can be understood that in this way, the valve core can abut against the protrusion first when it is screwed out, thus limiting the position of the valve core. In this way, not only is the position of the valve core further limited by the protrusion except for the limiting ring, but the limiting ring is also protected, ensuring the limiting ring not easy to fail or be damaged.

In some embodiments, the opening of the valve body is provided with a throat section, and the throat section abuts against the valve cap.

It can be understood that on the basis of a double limit to the valve core by the protrusion and the limiting ring, the throat section can further limit the valve core, thereby further enhancing a limiting effect of the valve core and avoiding occurrence of the valve core flying out.

In some embodiments, an inner sidewall of the valve cap is provided with an abutting portion, the valve cap is clamped to or threadedly connected to the valve body, and the abutting portion is capable of abutting against an outer wall of the throat section.

In some embodiments, the screw threaded member includes a connecting section and a threaded section, an end of the threaded section is connected to the connecting section, and the other end of the threaded section is capable of extending into the operating hole and being threadedly connected to the operating hole. An outer wall of the end of the threaded section adjacent to the connecting section is provided with a ring-shaped protrusion, the ring-shaped protrusion is capable of abutting against the valve cap along with the screw threaded member and being sealed with the valve cap.

It can be understood that, when the screw threaded member is tightened, the ring-shaped protrusion can be in contact with the valve cap to form a sealing connection, thereby effectively improving sealing performance and reducing leakage rate.

In some embodiments, a chamfer is provided on the valve cap at an end of the operating hole away from the valve core, and the ring-shaped protrusion abuts against the chamfer.

It can be understood that a sealing connection in point contact can be defined when the ring-shaped protrusion abuts against the chamfer. The sealing connection in point contact can further improve a sealing effect of the stop valve.

In some embodiments, the chamfer is inverted cone-shaped.

In some embodiments, the screw threaded member includes a connecting section and a threaded section, an end of the threaded section is connected to the connecting section, the other end of the threaded section is capable of extending into the operating hole and being threadedly connected to the operating hole. A sealing member is sleeved on the end of the threaded section adjacent to the connecting section, and the sealing member is configured for sealing a slit between the connecting section and the valve cap.

The present invention further provides a following technical solution.

An air conditioning system includes the stop valve.

Compared with the related art, in the stop valve provided in the present invention, the operating hole is provided on the valve cap, so that the screwed threaded member is capable of inserting into the operating hole and threadedly matched with the operating hole. Therefore, when the inside of the valve body is subjected to operations such as maintenance and testing, as long as the screw threaded member is disassembled from the operating hole, the valve rod can be inserted into the operating hole to screw out the valve core for testing. In this way, when the components inside the valve body is subjected to operations such as maintenance and testing, it is not necessary to disassemble the entire valve cap, so as to avoid a risk of the valve core flying out of the valve body caused by a failure of a limiting structure of the valve core.

### BRIEF DESCRIPTION OF THE DRAWINGS

FIG. 1 is a schematic view of a stop valve in a first embodiment of the present invention.
FIG. 2 is a schematic view of a stop valve in a second embodiment of the present invention.
FIG. 3 is a schematic view of a stop valve in an embodiment of the present invention in a use state.

In the figures, 100 represents a stop valve; 10 represents a valve body; 11 represents a valve cavity; 111 represents a limiting ring; 112 represents an inlet; 113 represents an outlet; 114 represents a valve port; 12 represents a throat section; 20 represents a valve core; 21 represents a connecting hole; 22 represents a valve rod; 30 represents a valve cap; 31 represents an operating hole; 32 represents a protrusion; 33 represents an abutting portion; 34 represents a chamfer; 40 represents a screw threaded member; 41 represents a connecting section; 42 represents a threaded section; 43 represents a ring-shaped protrusion; and 50 represents a sealing member.

### DETAILED DESCRIPTION

The technical solutions in the embodiments of the present invention are clearly and completely described in the following with reference to the accompanying drawings in the embodiments of the present invention. It is obvious that the described embodiments are only a part of the embodiments, but not all of the embodiments. All other embodiments obtained by those skilled in the art based on the embodiments of the present invention without making creative labor are within the scope of the present invention.

It should be noted that when a component is referred to as being "provided on" another element, it may be directly provided on the other element or a further element may be presented between them. When a component is referred to as being "disposed on" another element, it may be directly disposed on the other element or a further element may be presented between them. When an element is considered to be "fixed to" another element, it may be directly fixed to the other element or a further element may be presented between them.

Unless otherwise defined, all technical and scientific terms used herein have the same meaning as a skilled person in the art would understand. The terminology used in the description of the present invention is for the purpose of describing particular embodiments and is not intended to limit the invention. The term "or/and" as used herein includes any and all combinations of one or more of the associated listed items.

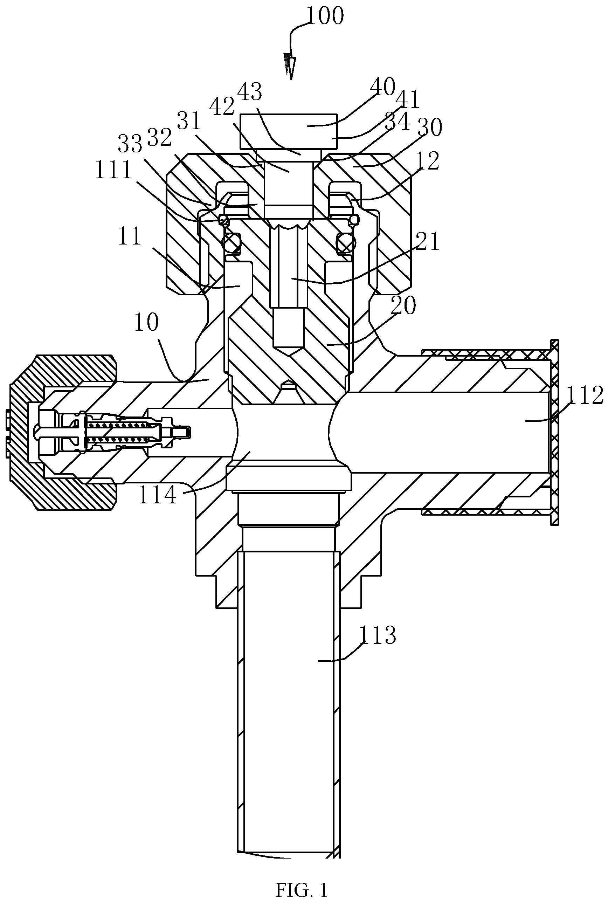

Referring to FIG. 1 to FIG. 3, the present invention provides a stop valve 100. The stop valve 100 is disposed on a refrigerant circuit between an indoor unit and an outdoor unit of an air conditioning system. The stop valve 100 is configured for opening or closing the refrigerant circuit, and for vacuumizing a valve cavity or filling a refrigerating fluid into the valve cavity during maintenance of the air conditioning system. In other embodiments, the stop valve 100 may also be applied in fields other than the field of air conditioning system, such as the field of fluid pipeline transportation, the field of petrochemical industry, the field of aerospace, and the like.

Specifically, the stop valve 100 includes a valve body 10, a valve core 20 and a valve cap 30. The valve body 100 includes a valve cavity 11 provided with an open end, the valve core 20 is provided inside the valve cavity 11 and capable of moving in the valve cavity 11, the valve cap 30 is disposed at the open end of the valve body 10 and threadedly connected to the valve body 10. The stop valve 100 further includes a screw threaded member 40, the valve cap 30 is provided with an operating hole 31, and the screwed threaded member 40 is capable of inserting into the operating hole 31 and threadedly matched with the operating hole 31.

It should be noted that in the related art, during maintenance of an air conditioning system, a valve cap of the stop valve is disassembled from a valve body to operate on components inside the valve body. In such a structure of the stop valve, the valve cap needs to be disassembled. Therefore, in extreme cases, when a stop ring or a constriction in the valve body fails, the valve core flies out of the valve body, resulting in personal safety hazards. In the present embodiment, the operating hole 31 is provided on the valve cap 30, so that the screwed threaded member 40 is capable of inserting into the operating hole 31 and threadedly matched with the operating hole 31. Therefore, when the inside of the valve body 10 is subjected to operations such as maintenance and testing, as long as the screw threaded member 40 is disassembled from the operating hole 31, the valve rod 22 can be inserted into the operating hole 31 to screw out the valve core 20 for testing. In this way, when the components inside the valve body 10 is subjected to operations such as maintenance and testing, it is not necessary to disassemble the entire valve cap 30, so as to avoid a risk of the valve core 20 flying out of the valve body 10 due to a failure of a limiting structure of the valve core 20.

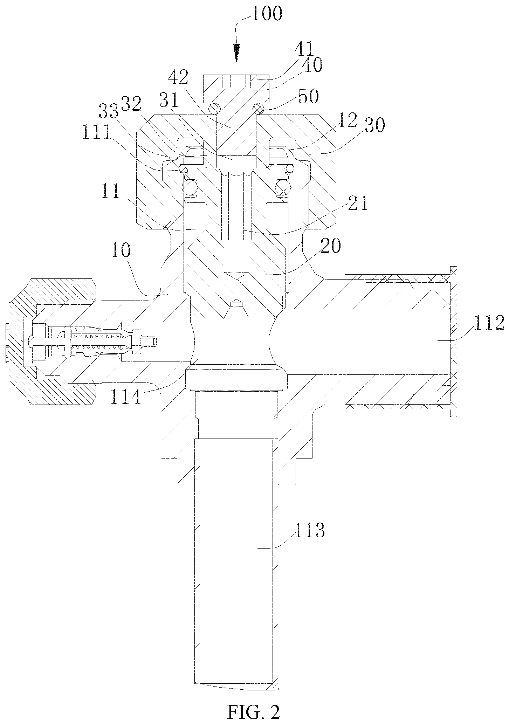

Referring to FIG. 1 and FIG. 2, the valve body 10 is a major component of the stop valve 100. For the valve body 10 used under different pressure levels, it can be produced by different mechanical manufacturing methods. In the present embodiment, the valve body 10 can be produced by a casting process. In other embodiments, valve body 10 may also be produced by a forging process or other processes.

Specifically, the valve body 10 can be made of metal, which can be suitable for working conditions under low pressure and normal temperature of industries such as water treatment industry, light industry, petroleum industry, chemical industry, and the like, and sealing performance of the metal can be good.

Furthermore, a side of the valve cap 30 towards the valve body 10 can be provided with a protrusion 32. The protrusion 32 can extend towards the inside of the valve cavity 11, the opening hole 31 can be located on the protrusion 32, and the protrusion 32 can be limitedly matched with the valve core 20. When the valve rod 22 is inserted into the operating hole 31 and the valve core 20 is screwed out for testing, an end face of the valve core 20 can abut against the protrusion 32, so that the valve core 20 cannot be separated from the valve body 10. The protrusion 32 can play a role of limiting a position of the valve core 20.

In addition, in the present embodiment, advantages of the protrusion 32 is facilitating placement of the screw threaded member 40, so as to ensure a more tightly connection between the screw threaded member 40 and the valve cap 30. Without the protrusion 32, wall thickness of the valve cap 30 need to increase to match with the screw threaded member 40, thereby increasing material cost. In other embodiments, protrusion 32 may not be provided, which is not limited herein.

Furthermore, the valve cavity 11 is provided with a limiting ring 111, and the limiting ring 111 can be provided at an end of the valve cavity 11 away from the valve core 20. When the valve rod 22 is screwed into the operating hole 31 and the valve core 20 is screwed out for testing, the valve core 20 may be screwed out together. To avoid the above problem, the limiting ring 111 can be provided to prevent the valve core 20 from being screwed out under drive of the valve rod 22, and play a role of limiting position of the valve core 20.

Alternatively, in the present embodiment, an end of the protrusion 32 away from the valve cap 30 can extend to the limiting ring 111 and be located in the same plane with the limiting ring 111. In some embodiments, an end of the protrusion 32 away from the valve cap 30 can extend through the limiting ring 111 and extend along an axis of the valve cavity. In this way, the valve core 20 can abut against the protrusion 32 first when it is screwed out, thus realizing the role of limiting the position of the valve core 20. In this way, not only is the position of the valve core 20 further limited by the protrusion except for the limiting ring 111, but the limiting ring 111 is also protected, ensuring the limiting ring not easy to fail or be damaged. In other embodiments, relative position of the protrusion 32 and the limiting ring 111 may also be provided in other ways, which is not limited herein.

Furthermore, the opening of the valve body 10 can be provided with a throat section 12, and the throat section 12 can abut against the valve cap 30. An inner sidewall of the valve cap 30 can be provided with an abutting portion 33, the valve cap 30 can be clamped to or threadedly connected to the valve body 10, and the abutting portion 33 can be capable of abutting against an outer wall of the throat section 12. On the basis of a double limit to the valve core 20 by the protrusion 32 and the limiting ring 111, the throat section 12 can further limit the valve core 20, thereby further enhancing a limiting effect of the valve core 20.

Specifically, a sealing connection in point contact can be defined between the abutting portion 33 and the throat section 12. That is, a second seal connection can be achieved on the basis of a threaded seal connection between the valve cap 30 and the valve body 10, thus enhancing the sealing performance and reducing the leakage rate.

### First embodiment

Referring to FIG. 1, the screw threaded member 40 can include a connecting section 41 and a threaded section 42, an end of the threaded section 42 can be connected to the connecting section 41, and the other end of the threaded section 42 can be capable of extending into the operating hole 31 and being threadedly connected to the operating hole 31. An outer wall of the end of the threaded section 42 adjacent to the connecting section 41 can be provided with a ring-shaped protrusion 43, the ring-shaped protrusion 43 can be capable of abutting against the valve cap 30 along with the screw threaded member 40 and being sealed with the valve cap 30. When the screw threaded member 40 is tightened, the ring-shaped protrusion 43 can be in contact with the valve cap 30 to form a sealing connection, thereby effectively improving the sealing performance and reducing the leakage rate.

Alternatively, in the present embodiment, the ring-shaped protrusion 43 can be made of brass, steel or aluminum alloy. The metal ring-shaped protrusion 43 can ensure a hard sealing connection between the screw threaded member 40 and the valve cap 30, thus enhancing high temperature resistance and strength of the metal ring-shaped protrusion and improving service life of the sealing parts.

Alternatively, in the present embodiment, the ring-shaped protrusion 43 and the screw threaded member 40 can be integrally formed. In other embodiments, the ring-shaped protrusion 43 and the screw threaded member 40 may also be connected by methods of soldering, etc., which is not limited herein.

Furthermore, a chamfer 34 can be provided on the valve cap 30 at an end of the operating hole 31 away from the valve core 20, the chamfer 34 can be inverted cone-shaped, and the ring-shaped protrusion 43 can abut against the chamfer 34. A sealing connection in point contact can be defined when the ring-shaped protrusion 43 abuts against the chamfer 34. The sealing connection in point contact further improve an enhance sealing effect of the stop valve 100.

### Second embodiment

Referring to FIG. 2, a structure of the stop valve in the second embodiment can be similar to that in the first embodiment, the same parts thereof can be referred to the elaboration in the first embodiment, which are not repeated herein, and differences between the second embodiment and the first embodiment are as follows.

In the present embodiment, a sealing member 50 can be sleeved on the end of the threaded section 42 adjacent to the connecting section 41, and the sealing member 50 can be configured for sealing a slit between the connecting section 41 and the valve cap 30.

Alternatively, in the present embodiment, the sealing member 50 can be made of rubber or plastic, which can ensure a soft sealing connection between the screw threaded member 40 and the valve cap 30. The sealing member 50 can have advantages of simple structure, small size and light weight.

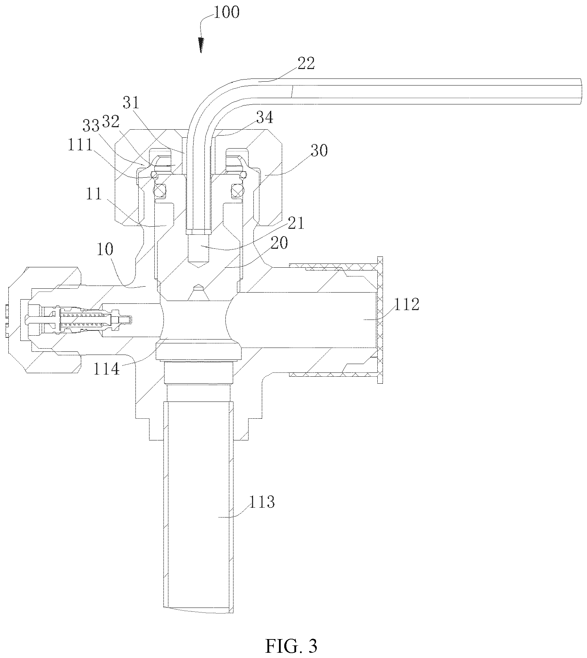

Referring to FIG. 3, the valve core 20 can be provided with a connecting hole 21, the connecting hole 21 can be provided with an internal thread, and configured to match with and connect to the valve rod 22. The valve rod 22 can drive the valve core 20 to move vertically along a center line of the valve body 10. When the stop valve 100 is in operation, the screw threaded member 40 can be screwed out from the operating hole 31, and the valve rod 22 can be screwed into the connecting hole 21 through the operating hole 31. When the valve rod 22 is turned clockwise, the valve body 10 can be closed, thus cutting off circulation of an internal medium. When the valve rod 22 is turned counterclockwise, the valve body 10 can be opened, thus starting the circulation of the internal medium, facilitating control of the internal medium.

In some embodiments, an external tool matching with the connecting hole 21 can be the valve rod 22. In other embodiments, the external tool may be any tool that matches with the connecting hole 21 and manipulates the valve core 20.

Furthermore, the valve body 10 can be provided with an inlet 112 and an outlet 113 which are in communication with the valve cavity 11, respectively. Furthermore, a valve port 114 can be provided inside the valve cavity 11, and the valve core 20 is configured to open or close the valve port 114, so as to start or block the internal medium flowing between the inlet 112 and the outlet 113.

Alternatively, in the present embodiment, the screw threaded member 40 may be an element such as a screw, a screw rod or a bolt, which is not limited herein.

The present invention further provides an air conditioning system (not shown), and the air conditioning system includes the stop valve 100.

The air conditioning system can have the advantages of the stop valve 100 mentioned above.

When performing maintenance and testing on the stop valve 100, the screw threaded member 40 can be screwed out from the operating hole 31, the valve rod 22 can be inserted into the operating hole 31 and threadedly matched with the connecting hole 21 of the valve core 20, and then the valve core 20 can be screwed out for testing. In this way, the entire valve cap 30 does not need to be disassembled before operations such as maintenance and testing on components inside the valve body 10, so as to avoid a risk of the valve core 20 flying out of the valve body 10 due to a failure of a limiting structure of the valve core 20. The valve core 20 can abut against the protrusion 32 when it is screwed out, so that the valve core 20 cannot be further screwed out, thus limiting the position of the valve core 20. In this way, not only is the position of the valve core 20 further limited by the protrusion 32 except for the limiting ring 111, but the limiting ring 111 is also protected, ensuring the limiting ring 111 not easy to fail or damage.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present invention.

The above-described embodiments are only several implementations of the present invention, and the descriptions are relatively specific and detailed, but they should not be construed as limiting the scope of the present invention. It should be understood by those of ordinary skill in the art that various modifications and improvements can be made without departing from the concept of the present invention, and all fall within the protection scope of the present invention. Therefore, the patent protection of the present invention shall be defined by the appended claims.

## Claims

1. A stop valve, **characterized by** comprising a valve body, a valve core and a valve cap, the valve body comprises a valve cavity provided with an open end, the valve core is provided inside the valve cavity and capable of moving in the valve cavity, the valve cap is disposed at the open end of the valve body and threadedly connected to the valve body;
wherein the stop valve further comprises a screw threaded member, the valve cap is provided with an operating hole, and the screwed threaded member is capable of inserting into the operating hole and threadedly matched with the operating hole.

2. The stop valve of claim 1, wherein a side of the valve cap towards the valve body is provided with a protrusion, the protrusion extends towards the inside of the valve cavity, the opening hole is located on the protrusion, and the protrusion is limitedly matched with the valve core.

3. The stop valve of claim 2, wherein the valve cavity is provided with a limiting ring, and the limiting ring is provided at an end of the valve cavity away from the valve core, an end of the protrusion away from the valve cap extends to the limiting ring and is located in the same plane with the limiting ring; or,
an end of the protrusion away from the valve cap extends through the limiting ring and extends along an axis of the valve cavity.

4. The stop valve of claim 3, wherein the opening of the valve body is provided with a throat section, and the throat section abuts against the valve cap.

5. The stop valve of claim 4, wherein an inner sidewall of the valve cap is provided with an abutting portion, the valve cap is clamped to or threadedly connected to the valve body, and the abutting portion is capable of abutting against an outer wall of the throat section.

6. The stop valve of claim 1, wherein the screw threaded member comprises a connecting section and a threaded section, an end of the threaded section is connected to the connecting section, and the other end of the threaded section is capable of extending into the operating hole and being threadedly connected to the operating hole; and
an outer wall of the end of the threaded section adjacent to the connecting section is provided with a ring-shaped protrusion, the ring-shaped protrusion is capable of abutting against the valve cap along with the screw threaded member and being sealed with the valve cap.

7. The stop valve of claim 6, wherein a chamfer is provided on the valve cap at an end of the operating hole away from the valve core, and the ring-shaped protrusion abuts against the chamfer.

8. The stop valve of claim 7, wherein the chamfer is inverted cone-shaped.

9. The stop valve of claim 1, wherein the screw threaded member comprises a connecting section and a threaded section, an end of the threaded section is connected to the connecting section, the other end of the threaded section is capable of extending into the operating hole and being threadedly connected to the operating hole; and
a sealing member is sleeved on the end of the threaded section adjacent to the connecting section, and the sealing member is configured for sealing a slit between the connecting section and the valve cap.

10. An air conditioning system, **characterized by** comprising the stop valve of any one of claims 1 to 9.
